# EUROPÄISCHE PATENTSCHRIFT

(11) **EP 0 658 594 B1**
(45) Veröffentlichungstag und Bekanntmachung des Hinweises auf die Patenterteilung: **31.03.1999**
(21) Anmeldenummer: 94810700.8
(22) Anmeldetag: 06.12.1994
(51) Int. Cl.: C08K 13/02

(54) **Stabilisator für chlorhaltige Polymere**
Stabilizer for chlorine-containing polymers
Stabilisant pour polymères contenant du chlore

(30) Priorität: 14.12.1993 CH 3734/93
(43) Veröffentlichungstag der Anmeldung: 21.06.1995
(73) Patentinhaber: Witco Vinyl Additives GmbH, 68623 Lampertheim (DE)
(72) Erfinder: Göritz, Klaus, Dr., D-69488 Birkenau (DE); Kaufhold, Johannes, D-64678 Lindenfels (DE)

(56) Entgegenhaltungen:
- DE-A- 1 806 494
- US-A- 3 196 129
- US-A- 3 919 165
- DATABASE WPI Derwent Publications Ltd., London, GB; AN 89-297874 & JP-A-1 221 447 (NITTO KASEI KK) 4. September 1989

## Beschreibung

Die Erfindung betrifft eine neue Stabilisatorkombination für chlorhaltige Polymere, ein Verfahren zum Stabilisieren von chlorhaltigen Polymeren und die so erhältlichen chlorhaltigen Polymere.

Organozinnverbindungen, wie Organozinnalkoholate, -carboxylate, -mercaptide, -oxide oder -sulfide werden verschiedentlich als Stabilisatoren für chlorhaltige Polymere vorgeschlagen.

Organozinnoxide werden hauptsächlich in Kombination mit weiteren Verbindungen eingesetzt. Aus den US-A-3,196,129 und 3,919,165 sind Kombinationen mit Thiophosphaten, -acetalen oder Phenolen bekannt. Kombinationen mit Organozinnmercaptiden werden beispielsweise in DE-A-18 06 494 beschrieben. Aus der JP-A-01221447 sind Alkali/Erdalkali-Zeolithe vom Typ A als Costabilisatoren mit Zinncarboxylaten in CPVC Zusammensetzungen bekannt.

Die bekannten Stabilisatoren und Stabilisatorgemische können in den Polymeren nicht allen gestellten Anforderungen entsprechen. So bewirken die sehr breit eingesetzten Organozinnmaleate, als bevorzugte Organozinncarboxylate, eine hohe Klebeneigung der Polymerschmelze an den Metallteilen der Verarbeitungsmaschinen, was durch erhöhte Gleitmittelzugaben kompensiert werden muss. Andere schwefelfreie

Organozinnverbindungen haben gegenüber den Maleaten eine deutlich schlechtere thermostabilisierdende Wirkung. Auch Organozinnoxide zeigen diesen Nachteil, der sich insbesondere bei Extrusion und Spritzguss unter höheren Temperaturen bemerkbar macht. Schwefelhaltige Organozinnverbindungen beeinflussen häufig die Lichtstabilität der Werkstoffe nachteilig, was eine Verwendung im Aussenbereich erschwert.

Es bestand daher die Aufgabe ein Stabilisatorsystem zu finden, das die Verarbeitung chlorhaltiger Polymere unter hoher thermischer und frikativer Belastung ermöglicht. Das betrifft vorzugsweise Prozesse wie Extrusion und Spritzguss von chloriertem PVC.

Überraschenderweise erfüllt eine Stabilisatorkombination aus einer Organozinnoxid-Verbindung und einer Verbindung aus der Reihe der kristallinen Alkali-/Erdalkali-alumosilikare in hohem Masse die Anforderungen. Neben einer guten Thermostabilität wird auch eine hohe Wärmeformbeständigkeit und Lichtstabilität erreicht.

Erfindungsgemäss ist daher eine Stabilisatorzusammensetzung, enthaltend:
a) mindestens eine organische Zinnoxidverbindung der Formel

   (RₐSnO_{b})_{c} (I),

   wobei R C₁-C₁₈-Alkyl bedeutet; a die Zahl 1 oder 2; b = (4-a)/2; und c grösser oder gleich 1 ist;
   und
b) mindestens eine Verbindung aus der Reihe der kristallinen Alkali-/Erdalkali-alumosilikate.

Die Komponenten a) bzw. b) können auch in Form von Mischungen vorliegen.

Die erfindungsgemässen Stabilisatorzusammensetzungen können weitere Komponenten enthalten. Die erfindungsgemässen Stabilisatorzusammensetzungen sind jedoch vorzugsweise frei von weiteren Organozinnverbindungen.

Bedeuten Substituenten Alkyl mit bis zu 18 Kohlenstoffatomen, so kommen hierfür die Reste wie Methyl, Ethyl, Propyl, Butyl, Pentyl, Hexyl, Octyl, Decyl, Dodecyl, Tetradecyl, Hexadecyl und Octadecyl sowie entsprechende verzweigte Isomere in Frage.

Als chlorhaltige Polymere können beispielsweise aufgezählt werden: Polymere des Vinylchlorides, Vinylharze, enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methycrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenechlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrylsäure und der alpha-substituierten Acrylsäure; Polymere von chlorierten Styrolen, zum Beispiel Dichlorstyrol; chlorierte Gummis; chlorierte Polymere des Ethylens; Polymere und nachchlorierte Polymere von Chlorbutadiens und deren Copolymere mit Vinylchlorid, Gummi-Hydrochlorid und chloriertes Gummi-Hydrochlorid; sowie Mischungen der genannten Polymere unter sich oder mit anderen polymerisierbaren Verbindungen.

Ferner sind umfasst die Pfropfpolymerisate von PVC mit EVA, ABS und MBS. Bevorzugte Substrate sind auch Mischungen der vorstehend genannten Homo-und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylactonen.

Weiterhin bevorzugt sind Suspensions- und Massepolymere, sowie Emulsionspolymere.

Als chlorhaltiges Polymerisat sind nachchloriertes Polyvinylchlorid, Polyvinylchlorid und auch Polymere des Vinylidenchlorids und Copolymere desselben mit Vinylchlorid und anderen polymerisierbaren Verbindungen besonders bevorzugt.

Bevorzugt sind Stabilisatorzusammensetzungen, wie oben beschrieben, enthaltend als a) eine Verbindung der Formel (RₐSnO_{b})_{c} (I), wobei R C₄-C₁₂-Alkyl bedeutet; a die Zahl 1 oder 2; b = (4-a)/2; und c grösser oder gleich 1 ist. Besonders bevorzugt bedeutet R C₄-oder C₈-Alkyl. Bevorzugt sind auch Mischungen von Verbindungen der Formeln R₂SnO (II) und (RSnO)₂O (III), wobei R C₁-C₁₈-Alkyl, bevorzugt C₄-C₁₂-Alkyl, bedeutet. In den bevorzugten Mischungen von Verbindungen der Formeln (II) und (III) überschreitet der Anteil der Verbindung der Formel (III) an der Mischung 50 Gew.-% nicht.

Zweckmässig sind Stabilisatorzusammensetzungen, wie oben beschrieben, enthaltend als b) mindestens eine Verbindung aus der Reihe der kristallinen Alkali-/Erdalkali-alumosilikate, wobei als Alkalimetalle Li, Na und K und als Erdalkalimetalle Mg, Ca, Sr und Ba zu nennen sind.

Der Begriff Alkali-/Erdalkali-alumosilikate umfasst sowohl Alkali-alumosilikate, wie Erdalkali-alumosilikate sowie Alumosilikate, welche Alkali- und Erdalkalimetalle enthalten. Die Alkali-/Erdalkali-alumosilikate können natürlichen oder synthetischen Ursprungs sein.

Bevorzugt sind als Komponente b) Verbindungen aus der Reihe der Zeolithe. Zeolithe können durch die allgemeine Formel (X)

M_{x/n}[(AlO₂)ₓ(SiO₂)_{y}]·wH₂O (X)

wobei n die Ladung des Kations M;
M ein Element der ersten oder zweiten Hauptgruppe, wie Li, Na, K, Mg, Ca, Sr oder Ba;
y : x eine Zahl zwischen 0,8 und 15, bevorzugt zwischen 0,8 und 1,2; und
w eine Zahl zwischen 0 und 300, bevorzugt zwischen 0,5 und 10, ist, beschrieben werden.

Weiter sind erfindungsgemäss verwendbare Zeolithe aus "Atlas of Zeolite Structure Types", W.M. Meier und D.H. Olson, Verlag Butterworths, 3. Auflage 1992 bekannt.

Die bevorzugten an sich bekannten Zeolithe vom Typ NaA, die einen durchschnittlichen wirksamen Porendurchmesser von 4 Å besitzen, weshalb sie auch als Zeolithe 4A bezeichnet werden, können nach bekannten Methoden hergestellt werden.

Geeignete Syntheseverfahren sind u.a. in der DE-OS 24 12 837 beschrieben. Weitere Einzelheiten zur Beschaffenheit und Herstellung dieser Natrium-Alumosilikate sind beispielsweise den folgenden Literaturstellen zu entnehmen: DE-OS 26 51 485, DE-OS 26 51 445, DE-OS 26 51 436, DE-OS 26 51 419, DE-OS 26 51 420, DE-OS 26 51 437, US-PS 3 112 176.

Im Rahmen der Erfindung lassen sich auch solche feinteiligen wasserunlöslichen Natriumalumosilikate verwenden, die in Gegenwart von wasserlöslichen anorganischen oder organischen Dispergiermitteln gefällt und kristallisiert wurden. Als wasserlösliche organische Dispergiermittel eignen sich Tenside, nichttensidartige aromatische Sulfonsäuren und Verbindungen mit Komplexbildungsvermögen gegenüber Calcium. Die genannten Dispergiermittel können in beliebiger Weise vor oder während der Fällung in das Reaktionsgemisch eingebracht werden; sie können zum Beispiel als Lösung vorgelegt oder in der Aluminat- und/oder Silikatlösung aufgelöst werden. Die Menge des Dispergiermittels sollte wenigstens 0,05 Gewichtsprozent, vorzugsweise 0,1-5 Gewichtsprozent, bezogen auf den gesamten Fällungsansatz, betragen. Zum Kristallisieren wird das Fällungsprodukt 1/2 bis 24 Stunden auf 50 bis 200°C erhitzt. Aus der Vielzahl brauchbarer Dispergiermittel sind als Beispiele Natriumlaurylethersulfat, Natriumpolyacrylat und die Natriumsalze der 1-Hydroxyethan-1,1-diphosphonsäure zu nennen.

Die erfindungsgemäss geeigneten Alkali-/Erdalkali-alumosilikate enthalten beispielsweise 13 bis 25 Gewichtsprozent gebundenes Wasser; bevorzugt werden solche Produkte eingesetzt, deren Wassergehalt im Bereich von 18 bis 25 Gewichtsprozent liegen.

Bevorzugt sind Stabilisatorzusammensetzungen, wie oben beschrieben, enthaltend als b) mindestens eine der Verbindungen der Formeln

Na₁₂Al₁₂Si₁₂O₄₈ · 27 H₂O [Zeolith A],

Na₆Al₆Si₆O₂₄ · 2NaX · 7,5 H₂O, X = OH, Cl, ClO₄, 1/2CO₃ [Sodalith]

Na₆Al₆Si₃₀O₇₂ · 24 H₂O,

Na₈Al₈Si₄₀O₉₆ · 24 H₂O,

Na₁₆Al₁₆Si₂₄O₈₀· 16 H₂O,

Na₁₆Al₁₆Si₃₂O₉₆· 16 H₂O,

Na₅₆Al₅₆Si₁₃₆O₃₈₄ · 250 H₂O, [Zeolith Y]

Na₈₆Al₈₆Si₁₀₆O₃₈₄· 264 H₂O [Zeolith X]

oder die durch teilweisen bzw. vollständigen Austausch der Na-Atome durch Li-, K-, Mg-, Ca-, Sr-, Ba- oder Zn-Atome darstellbaren Zeolithe wie

(Na,K)₁₀Al₁₀Si₂₂O₆₄· 20 H₂O.

Ca_{4,5}Na₃[(AlO₂)₁₂(SiO₂)₁₂] · 30 H₂O

K₉Na₃[(AlO₂)₁₂(SiO₂)₁₂]· 27 H₂O

Die angeführten Zeolithe können auch wasserärmer bzw. wasserfrei sein.

Die Stabilisatormischungen enthalten die Komponenten a) und b), beispielsweise, im Gewichtsverhältnis von 1:1 bis 1:10.

Ein weiterer Gegenstand der vorliegenden Erfindung sind stabilisierte chlorhaltige Polymerzusammensetzungen, enthaltend, ein chlorhaltiges Polymer,
a) mindestens eine Verbindung der Formel (I) und
b) mindestens eine Verbindung aus der Reihe der kristallinen Alkali-/Erdalkali-alumosilikate.

Bevorzugt sind stabilisierte chlorhaltige Polymerzusammensetzungen, enthaltend,
a) 0,1 bis 4 Gew.-Teile einer Verbindung der Formel (I),
b) 0,2 bis 10 Gew.-Teile einer Verbindung aus der Reihe der kristallinen Alkali-/Erdalkali-alumosilikate
und 100 Gew.-Teile chlorhaltiges Polymer.

Der bevorzugte Mengenbereich für die Verbindung der Formel (I) in der Polymerzusammensetzung ist 0,4 bis 2 Gew.-Teile, bezogen auf 100 Gew.-Teile chlorhaltiges Polymer. Der bevorzugte Mengenbereich für eine Mischung der Verbindung der Formeln (II) und (III) in der Polymerzusammensetzung ist 0,4 bis 1,5 Gew.-Teile einer Verbindung der Formel (II) und 0 bis 0,2 Gew.-Teile einer Verbindung der Formel (III), jeweils bezogen auf 100 Gew.-Teile chlorhaltiges Polymer

Der bevorzugte Mengenbereich für die Verbindung aus der Reihe der kristallinen Alkali-/Erdalkali-alumosilikate in der Polymerzusammensetzung ist 0,4 bis 6 Gew.-Teile, bezogen auf 100 Gew.-Teile chlorhaltiges Polymer. Besonders bevorzugt sind 0,8 bis 4 Gew.-Teile.

Eine bevorzugte Stabilisatorzusammensetzung enthält somit beispielsweise 25 Teile (C₈H₁₇)₂SnO, 0,75 Teile (C₈H₁₇SnO)₂O und 75 Teile Na-Zeolith Typ 4A.

Bevorzugt sind auch Stabilisator- bzw. Polymerzusammensetzungen, welche neben einer Verbindung der Formel (I) und einer Verbindung aus der Reihe der kristallinen Alkali-/Erdalkali-alumosilikate ein Perchlorat eines ein- oder zweiwertigen Metalles enthält, wobei es sich bei der Perchloratverbindung auch um eine Mischung verschiedener Perchlorate handeln kann.

Finden weitere Stabilisatoren aus der Reihe der organischen oder anorganischen Zn-, Ca-, Ba-, Mg- oder Pb-Verbindungen, wie beispielsweise Fettsäuresalze, Anwendung, so können beispielsweise 0 bis 10 Gew.-Teile, bezogen auf die Polymerzusammensetzung, eingesetzt werden. Zweckmässig sind 0,05 bis 5 Gew.-Teile, bevorzugt 0,1 bis 5 Gew.-Teile.

Die erfindungsgemässen Zusammensetzungen können auch weitere, für chlorhaltige Thermoplasten übliche stabilisierend wirkende Zusätze enthalten. So enthalten sie beispielsweise 0-3 Teile, bezogen auf die Polymerzusammensetzung, insbesondere 0-1,5, vor allem 0-1 Teile eines oder mehrerer Phosphite. Solche Phosphite können etwa in einer Menge von 0,01-3, insbesondere 0,01-1,5, z.B. 0,01-1, bevorzugt 0,1-0,6, z.B. 0,2-0,5 Teilen enthalten sein. Beispiele für derartige Phosphite sind etwa solche der Formeln 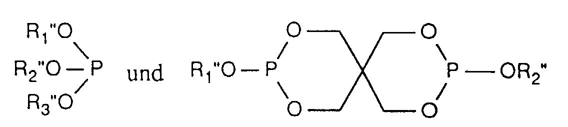 worin R¹'', R²'' und R³'' gleich oder verschieden sind und C₆-C₁₈-Alkyl, C₆-C₁₈-Alkenyl, einen substituierten oder unsubstituierten Phenylrest oder C₅-C₇-Cycloalkyl bedeuten.

Bedeuten R¹'', R²'' und R³'' C₆-C₁₈-Alkyl, so handelt es sich dabei z.B. um n-Hexyl, n-Octyl, n-Nonyl, Decyl, Dodecyl, Tetradecyl, Hexadecyl oder Octadecyl. Bevorzugt sind Alkylgruppen mit 8 bis 18 C-Atomen.

Als substituiertes Phenyl bedeuten R¹'', R²'' und R³'' beispielsweise Tolyl, Ethylphenyl, Xylyl, Cumyl, Cymyl, Kresyl, 4-Methoxyphenyl, 2,4-Di-methoxyphenyl, Ethoxyphenyl, Butoxyphenyl, p-n-Octylphenyl, p-n-Nonylphenyl oder p-n-Dodecylphenyl.

Besonders geeignete Phosphite sind Trioctyl-, Tridecyl-, Tridodecyl-, Tritetradecyl, Tristearyl-, Trioleyl-, Triphenyl-, Trikresyl-, Tris-p-nonylphenyl- oder Tricyclohexylphosphit und besonders bevorzugt sind die Aryl-Dialkyl- sowie die Alkyl-Diaryl-Phosphite, wie z.B. Phenyldidecyl-, (2,4-Di-tert.-butylphenyl)-di-dodecylphosphit, (2,6-Di-tert.-butylphenyl)-di-dodecylphosphit und die Dialkyl-und Diaryl-pentaerythrit-diphosphite, wie Distearylpentaerythrit-diphosphit.

Bevorzugte organische Phosphite sind Distearyl-pentaerythrit-diphosphit, Trisnonylphenylphosphit und Phenyl-didecyl-phosphit.

Ferner können in den erfindungsgemässen Zusammensetzungen weitere bekannte Costabilisatoren enthalten sein, beispielsweise 0-2, insbesondere 0-1,5 Teile, bezogen auf die Polymerzusammensetzung. Sie sind dann vorzugsweise in einer Menge von 0,01-2, insbesondere 0,05-1,5, z.B. 0,1-1, vor allem 0,1-0,5 Teilen vorhanden. Als derartige Costabilisatoren seien 1,3-Diketone, Epoxyverbindungen, Aminocrotonsäureester, Dehydracetsäure, 2,4-Dihydroxybenzophenon, 2,4-Dihydroxy-4'-tert.-butylbenzophenon Dihydropyridin-Derivate und Pyrrolderivate genannt.

Zweckmässig sind 1,3-Diketone der allgemeinen Formel (IV) oder (IVa), 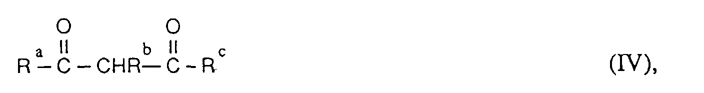 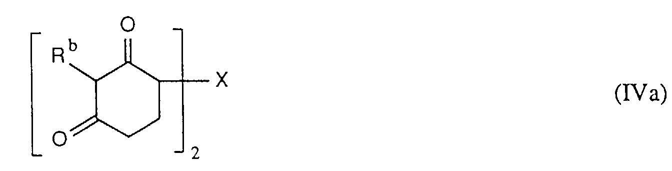 wobei
- R^{a}: Alkyl mit 1 bis 22 C-Atomen, C₅-C₁₀-Hydroxyalkyl, Alkenyl mit 2 bis 22 C-Atomen, Phenyl, mit 1 bis 3 Gruppen der Reihe -OH, C₁-C₄-Alkyl, C₁- bis C₄-Alkoxy oder Halogen substituiertes Phenyl, Phenyl-C₁-C₄-alkyl, eine Gruppe der Formel 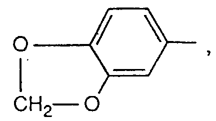 Cycloalkyl mit 5 bis 12 Ring-C-Atomen, oder mit 1 bis 3 C₁-C₄-Alkylgruppen substituiertes Cycloalkyl mit 5 bis 12 Ring-C-Atomen bedeutet,
- R^{c}: Alkyl mit 1 bis 22 C-Atomen, C₅-C₁₀-Hydroxyalkyl, Alkenyl mit 2 bis 22 C-Atomen, Phenyl, mit 1 bis 3 Gruppen der Reihe -OH, C₁-C₄-Alkyl, C₁- bis C₄-Alkoxy oder Halogen substituiertes Phenyl oder Phenyl-C₁-C₄-alkyl, eine Gruppe der Formel 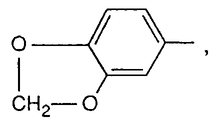 Cycloalkyl mit 5 bis 12 Ring-C-Atomen, oder mit 1 bis 3 C₁ bis C₄-Alkylgruppen substituiertes Cycloalkyl mit 5 bis 12 Ring-C-Atomen bedeutet,
- R^{b}: -H, Alkyl mit 1 bis 18 C-Atomen, Alkenyl mit 2 bis 12 C-Atomen, Phenyl, C₁-C₄-Alkyl substituiertes Phenyl, Phenyl-C₁-C₄-alkyl, oder eine Gruppe der Formel 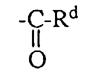 bedeutet,
wobei R^{d} -CH₃, -C₂H₅ oder Phenyl darstellt, oder worin

R^{a} und R^{b} zusammen die Bedeutung eines Tetramethylenrestes oder eines Tetramethylenrestes, der mit einem Benzorest anelliert ist, aufweisen oder

R^{a} und R^{c} zusammen die Bedeutung eines Trimethylenrestes oder eines mit 1 bis 3 C₁-C₄-Alkylgruppen substituierten Trimethylenrestes aufweisen, und X Alkylen mit 1-4 C-Atomen bedeutet.

R^{a} und R^{c} als Alkyl mit 1 bis 22 C-Atomen kann beispielsweise Methyl, Ethyl, Propyl, n-Butyl, tert.-Butyl, Pentyl, Hexyl, 2-Ethylhexyl, Nonyl, Decyl, Undecyl, Dodecyl, Tridecyl, Octadecyl oder Eicosyl sein, R^{b} als Alkyl mit 1 bis 18 C-Atomen kann beispielsweise obige Bedeutung ohne Eicosyl haben.

Beispiele von C₅-C₁₀-Hydroxyalkyl für R^{a} und R^{c} sind 5-Hydroxypentyl, 6-Hydroxyethyl oder 7-Hydroxyheptyl.

Beispiele für R^{a} und R^{c} als Alkenyl mit 2 bis 22 C-Atomen sind Vinyl, Propenyl, Allyl, Butenyl, Methallyl, Hexenyl, Decenyl oder Heptadecenyl. Entsprechende Beispiele für R^{b} als Alkenyl mit 2 bis 12 C-Atomen lassen sich sinngemäss obiger Aufzählung entnehmen.

Bei den Phenylgruppen, die mit vorzugsweise ein bis drei Gruppen aus der Reihe -OH, C₁-C₄-Alkyl, C₁-C₄-Alkoxy oder Halogen substituiert sind, wie für R^{a} und R^{c} erwähnt, kann es sich um 4-Hydroxyphenyl-, um 4-Hydroxy-3,5-di-C₁-C₄-alkylphenyl, wobei C₁-C₄-Alkyl beispielsweise Methyl oder t-Butyl ist, um Methylphenyl, Dimethylphenyl, Ethylphenyl, n-Butylphenyl, tert.-Butylphenyl, Methyl-tert.-butylphenyl, di-tert.-Butylphenyl, um Methoxy oder Ethoxyphenyl oder um Monochlorphenyl handeln.

Bedeutet R^{b} C₁-C₄-Alkyl substituiertes Phenyl so sind damit z.B. Methylphenyl, Ethylphenyl oder tert.-Butylphenyl umfasst.

Die Bedeutung von Phenyl-C₁-C₄-alkyl für R^{a}, R^{b} und R^{c} ist beispielsweise Benzyl oder Methylbenzyl.

R^{a} und R^{c} können auch Cycloalkyl mit 5 bis 12 Ring-C-Atomen oder mit 1 bis 3 C₁-C₄-Alkylgruppen substituietes Cycloalkyl mit 5 bis 12 Ring-C-Atomen bedeuten. Beispiele dafür sind Cyclopentyl, Cyclohexyl, Cycloheptyl, Cyclobutyl, Cyclononyl, Cyclododecyl usw., sowie Methylcyclohexyl, Dimethylcyclohexyl, Trimethylcyclohexyl, tert.-Butylcyclohexyl.

Beispiele für 1,3-Diketone sind:
Dehydracetsäure, Dehydropropionylacetsäure, Dehydrobenzoylacetsäure, Cyclohexan-1,3-dion, Dimedon, 2,2'-Methylenebiscyclohexan-1,3-dion, 2-Benzylcyclohexan-1,3-dion, Acetyltetralon, Palmitoyltetralon, Stearoyltetralon, Benzoyltetralon, 2-Acetylcyclohexanon, 2-Benzoyl-cyclohexanon, 2-Acetyl-cyclohexane-1,3-dion, Benzoyl-p-chlorobenzoylmethan, Bis-(4-methylbenzoyl)methan, Bis-(2-hydroxybenzoyl)methan, Benzoylaceton, Tribenzoylmethan, Diacetylbenzoylmethan, Stearoylbenzoylmethan, Palmitoylbenzoylmethan, Lauroylbenzoylmethan, Dibenzoylmethan, 4-Methoxybenzoylbenzoylmethan, Bis-(4-methoxybenzoyl)methan, Bis-(4-chlorobenzoyl)methan, Bis-(3,4-methylenedioxybenzoyl)methan, Benzoyl- acetyloctylmethan, Benzoylacetylphenylmethan, Stearoyl-4-methoxy-benzoyl-methan, Bis-(4-t-butylbenzoyl)methan, Butanoylaceton, Heptanoylaceton, Distearoylmethan, Acetylaceton, Stearoylaceton, Palmitoylaceton, Lauroylaceton, Benzoylformylmethan, Benzoylphenylacetylmethan, Bis-(cyclohexan-(1,3)-dion-yl)methan oder Di-pivaloylmethan.

Als Costabilisatoren verwendbare 1,3-Diketoverbindungen sind insbesondere jene, die in der DE-B 2 600 516 und der EP-A 35 268 beschrieben sind, z.B. solche der im Patentanspruch der DE-B 2 600 516 angegebenen Formel. Bevorzugte 1,3-Diketoverbindungen sind Benzoylstearoyl-methan, 2-Benzoylacetessigsäurealkyl(z.B. ethyl)-ester und Triacylmethane.

Die im Rahmen der Erfindung verwendbaren Epoxidverbindungen können eine aliphatische, aromatische, cycloaliphatische, araliphatische oder heterocyclische Struktur haben; sie enthalten Epoxidgruppen als Seitengruppen. Die Epoxidgruppen sind vorzugsweise als Glycidylgruppen über Ether- oder Esterbindungen mit dem Restmolekül verbunden, oder es handelt sich um N-Glycidylderivate von heterocyclischen Aminen, Amiden oder Imiden. Epoxidverbindungen dieser Typen sind allgemein bekannt und im Handel erhältlich.

Die Epoxidverbindungen enthalten wenigstens einen Epoxyrest, insbesondere solche der Formel A 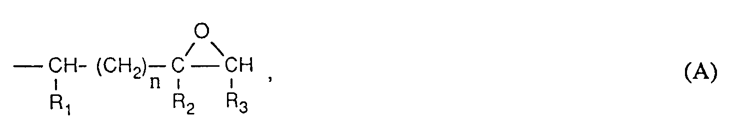 wobei dieser direkt an Kohlenstoff, Sauerstoff-, Stickstoff- oder Schwefelatome gebunden ist, worin R₁ und R₃ beide Wasserstoff sind, R₂ Wasserstoff oder Methyl und n = 0 ist, oder worin R₁ und R₃ zusammen -CH₂-CH₂- oder -CH₂-CH₂-CH₂- bedeuten, R₂ dann Wasserstoff und n = 0 oder 1 ist.

Beispielhaft für Epoxidverbindungen sind zu erwähnen:

I) Glycidyl- und β-Methylglycidylester erhältlich durch Umsetzung einer Verbindung mit mindestens einer Carboxylgruppe im Molekül und Epichlorhydrin bzw. Glycerindichlorhydrin bzw. β-Methyl-epichlorhydrin. Die Umsetzung erfolgt zweckmässig in der Gegenwart von Basen.

Als Verbindungen mit mindestens einer Carboxylgruppe im Molekül können aliphatische Carbonsäuren verwendet werden. Beispiele für diese Carbonsäuren sind Glutarsäure, Adipinsäure, Pimelinsäure, Korksäure, Azelainsäure, Sebazinsäure oder dimerisierte bzw. trimerisierte Linolsäure, Acryl- und Methacrylsäure, Capron-, Capryl-, Laurin-, Myristin-, Palmitin-, Stearin- und Pelargonsäure.

Es können aber auch cycloaliphatische Carbonsäuren eingesetzt werden, wie beispielsweise Cyclohexancarbonsäure, Tetrahydrophthalsäure, 4-Methyltetrahydrophthalsäure, Hexahydrophthalsäure oder 4-Methylhexahydrophthalsäure.

Weiterhin können aromatische Carbonsäuren Verwendung finden, wie beispielsweise Benzoesäure, Phthalsäure, Isophthalsäure, Trimellithsäure oder Pyromellithsäure.

Ebenfalls können auch carboxylterminierte Addukte, z.B. von Trimellithsäure und Polyolen, wie beispielsweise Glycerin oder 2,2-Bis-(4-hydroxycyclohexyl)-propan verwendet werden.

Weitere im Rahmen dieser Erfindung verwendbare Epoxidverbindungen finden sich in der EP 0 506 617.

II) Glycidyl- oder (β-Methylglycidyl)-ether erhältlich durch Umsetzung einer Verbindung mit mindestens einer freien alkoholischen Hydroxygruppe und/oder phenolischen Hydroxygruppe und einem geeignet substituierten Epichlorhydrin unter alkalischen Bedingungen, oder in Anwesenheit eines sauren Katalysators und anschliessender Alkalibehandlung.

Ether dieses Typs leiten sich beispielsweise ab von acyclischen Alkoholen, wie Ethylenglykol, Diethylenglykol und höheren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Bistrimethylolpropan, Pentaerythrit, Sorbit, sowie von Polyepichlorhydrinen, Butanol, Amylalkohol, Pentanol, sowie von monofunktionellen Alkoholen wie Isooctanol, 2-Ethylhexanol, Isodecanol sowie C₇-C₉-Alkanol- und C₉-C₁₁-Alkanolgemischen.

Sie leiten sich aber auch beispielsweise ab von cycloaliphatischen Alkoholen wie 1,3-oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne wie N,N-Bis-(2-hydroxyethyl)-anilin oder p,p'-Bis-(2-hydroxyethylamino)-diphenylmethan.

Die Epoxidverbindungen können sich auch von einkernigen Phenolen ableiten, wie beispielsweise von Phenol, Resorcin oder Hydrochinon; oder sie basieren auf mehrkernigen Phenolen wie beispielsweise auf Bis-(4-hydroxyphenyl)-methan, 2,2-Bis-(4-hydroxyphenyl)-propan, 2,2-Bis-(3,5-dibrom-4-hydroxyphenyl)-propan,
4,4'-Dihydroxydiphenylsulfon oder auf unter sauren Bedingungen erhaltene Kondensationsprodukte von Phenolen mit Formaldehyd wie Phenol-Novolake.

Weitere mögliehe endständige Epoxide sind beispielsweise: Glycidyl-1-naphthylether, Glycidyl-2-phenylphenylether, 2-Biphenylglycidylether, N-(2,3-epoxypropyl)-phthalimid und 2,3-Epoxypropyl-4-methoxyphenylether.

III) (N-Glycidyl)-Verbindungen erhältlich durch Dehydrochlorierung der Reaktionsprodukte von Epichlorhydrin mit Aminen, die mindestens ein Aminowasserstoffatom enthalten. Bei diesen Aminen handelt es sich zum Beispiel um Anilin, N-Methylanilin, Toluidin, n-Butylamin, Bis-(4-aminophenyl)-methan, m-Xylylendiamin oder Bis-(4-methylaminophenyl)-methan, aber auch N,N,O-Triglycidyl-m-aminophenol oder N,N,O-Triglycidyl-p-aminophenol.

Zu den (N-Glycidyl)-Verbindungen zählen aber auch N,N'-Di-, N,N',N''-Tri- und N,N',N'',N'''-Tetraglycidylderivate von Cycloalkylenharnstoffen, wie Ethylenharnstoff oder 1,3-Propylenharnstoff, und N,N'-Diglycidylderivate von Hydantoinen, wie von 5,5-Dimethylhydantoin oder Glykoluril und Triglycidylisocyanurat.

IV) S-Glycidyl-Verbindungen, wie beispielsweise Di-S-glycidylderivate, die sich von Dithiolen, wie beispielsweise Ethan-1,2-dithiol oder Bis-(4-mercaptomethylphenyl)-ether ableiten.

V) Epoxidverbindungen mit einem Rest der Formel A, worin R₁ und R₃ zusammen -CH₂-CH₂- bedeuten und n 0 ist, sind Bis-(2,3-epoxycyclopentyl)-ether, 2,3-Epoxycyclopentylglycidylether oder 1,2-Bis-(2,3-epoxycyclopentyloxy)-ethan. Ein Epoxidharz mit einem Rest der Formel A, worin R₁ und R₃ zusammen -CH₂-CH₂- sind und n 1 bedeutet, ist beispielsweise 3,4-Epoxy-6-methyl-cyclohexancarbonsäure-(3',4'-epoxy-6'-methyl-cyclohexyl)-methylester.

Weitere verwendbare Epoxyverbindungen, wie epoxidiertes Sojabohnenöl, werden beispielsweise in "Plastics Additives", Herausgeber H. Gächter und H. Müller, Hanser Verlag, 3. Auflage, 1990, Seiten 303/4 und US 3,928,267 beschrieben.

Als Aminocrotonsäureester kommen insbesondere die Ester mit einwertigen geradkettigen C₈-C₂₀-, insbesondere C₁₂-C₁₈-Alkoholen und/oder mit 1,3- bzw. 1,4-Butandiol und/oder 1,2-Dipropylenglykol und/oder Thiodiethylenglykol in Betracht.

Als Pyrrol-Costabilisatoren sind jene besonders zu erwähnen, die in der EP-A 22 087 und der GB-A 2 078 761 beschrieben sind, z.B. der dort angegebenen Formel I, vorzugsweise jene Pyrrolderivate, die in den Ansprüchen 2-9 der EP-A 22 087 definiert sind. Als Beispiel sei 2-Methyl-3-cyclohexyloxyc arbonyl-4-phenyl-1H-pyrrol genannt.

Andere Stabilisatoren, die in den erfindungsgemässen Zusammensetzungen angewendet werden können, sind Polyole. Die anzuwendenden Mengen sind beispielsweise bis zu 3 Gew.-Teile, bezogen auf 100 Gew.-Teile Polymerzusammensetzung, zweckmässig bis zu 2 Gew.-Teilen und vorzugsweise 0,01 bis 1 Gew.-Teil. Typische Beispiele von Polyolen sind Pentaerythrit, Dipentaerythrit, Trimethylolpropan, Ditrimethylolpropan, Tris-(2-hydroxyethyl)isocyanurat (THEIC), wobei letzteres bevorzugt ist, Sorbit, Mannit und Inosit.

Ferner können die erfindungsgemässen Zusammensetzungen übliche Antioxidantien, Pigmente, Lichtstabilisatoren und UV-Absorber enthalten.

Ein weiterer Gegenstand der vorliegenden Erfindung ist ein Verfahren zum Stabilisieren von chlorhaltigen Polymeren. Hierzu wird in der Regel die Stabilisatorzusammensetzung, enthaltend die Komponenten a) und b) sowie gegebenenfalls weitere Zusätze, in das Polymer eingearbeitet, wozu sich an sich bekannte Vorrichtungen, wie Kalander, Mischer, Kneter und dergleichen, anbieten. Die Komponenten a) und b) der erfindungsgemäßen Stabilisatorzusammensetzung sowie optionale Zusätze können den zu stabilisierenden Polymeren auch einzeln oder in Form eines Masterbatches zugesetzt werden. Bevorzugte Komponenten a) und b), bevorzugte Mengenverhältnisse und die weiteren möglichen Zusätze ergeben sich aus den vorstehenden Erläuterungen zu der erfindungsgemässen Stabilisator- bzw. Polymerzusammensetzung.

Die nach vorliegender Erfindung stabilisierten Zusammensetzungen können auf bekannte Weisen in die gewünschte Form gebracht werden. Solche Verfahren sind beispielsweise Kalandrieren, Extrudieren, Spritzgiessen, Sintern oder Extrusions-Blasen. Die Zusammensetzungen können auch zu Schaumstoffen verarbeitet werden.

Bevorzugte stabilisierte chlorhaltige Polymerzusammensetzungen sind nicht weichgemachte, resp. weichmacherfreie oder im wesentlichen weichmacherfreie Zusammensetzungen.

Die stabilizierten Züsammensetzüngen der vorliegenden Erfindung findenVerwendung insbesondere, in Form von Hart-Rezepturen, für Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Sidings, Fittings und Apparatur-Gehäuse (Computer, Haushaltsgeräte).

Bevorzugt wird die Verwendung der oben beschriebenen Polymerzusammensetzungen als Hartprofile für Aussenanwendungen und als Hartfolien.

Die nachfolgenden Beispiele erläutern die Erfindung näher. Alle Angaben in Teilen und Prozenten beziehen sich, wie auch in der übrigen Beschreibung, auf das Gewicht, sofern nicht anders angegeben.

Beispiel 1: Verschiedene CPVC-Zusammensetzungen werden durch Vermischen der einzelnen Komponenten gemäss nachfolgender Tabelle hergestellt (Mengenangaben in Gew.-Teilen).

**Tabelle 1:**

| | Beispiel:Vergleich | 1 |
|---|---|---|
| Chloriertes PVC (CPVC) | 100,0 | 100,0 |
| Impactmodifier (Acrylat) | 8,5 | 8,5 |
| Polymethylmethacrylat | 1,5 | 1,5 |
| Teiloxidiertes PE-Wachs | 1,3 | 1,3 |
| Kreide | 2,0 | 2,0 |
| Titandioxid | 4,0 | 4,0 |
| **Di-n-butylzinnoxid** | **0,8** | **0,8** |
| **Zeolith A (Wessalith P)** | **---** | **4,0** |

Jeweils 57 g der CPVC-Zusammensetzungen werden in der Knetkammer eines Brabender-Plastocorders bei 35 Upm und 190°C thermisch und frikativ belastet. Im Abstand von jeweils 5 Minuten werden aus der plastifizierten CPVC-Masse Proben (ca. 5 g) entnommen, welche anschliessend bei 180°C innerhalb von 1,5 Minuten zu Prüfkörpern verpresst werden. Von den Prüfkörpern wird farbmetrisch der Farbabstandswert (Δ E) nach DIN 6174 (CIE-LAB 1976) bestimmt. Die Ergebnisse der untenstehenden Tabelle 2 zeigen eine deutliche Verbesserung der Stabilität bei der erfindungsgemässen Probe. Ein höherer Farbabstandswert zeigt eine stärkere Verfärbung an.

**Tabelle 2:**

| ΔE der Probekörper nach Belastung bei 190°C | | | | | | | |
|---|---|---|---|---|---|---|---|
| | 5 | 10 | 15 | 20 | 25 | 30 | [min] |
| Vergleich | 27,3 | 35,8 | 43,5 | 51,0 | Zersetzung | | |
| **Beispiel 1** | **24,1** | **31,5** | **34,6** | **37,9** | **41,4** | **46,8** | |

## Patentansprüche

1. Stabilisatorzusammensetzung für chlorhaltige Polymere, enthaltend
a) mindestens eine organische Zinnoxidverbindung der Formel
(RₐSnO_{b})_{c} (I),
wobei R C₁-C₁₈-Alkyl bedeutet; a die Zahl 1 oder 2; b = (4-a)/2;
und c grösser oder gleich 1 ist;
und
b) mindestens eine Verbindung aus der Reihe der kristallinen Alkali-/Erdalkali-alumosilikate.

2. Stabilisatorzusammensetzung nach Anspruch 1, enthaltend als Komponente a) eine Verbindung der Formel (1), worin R C₄-C₁₂-Alkyl bedeutet.

3. Stabilisatorzusammensetzung nach Anspruch 1, enthaltend als Komponente a) eine Mischung von Verbindungen der Formeln R₂SnO (II) und (RSnO)₂O (III), worin R C₁-C₁₈-Alkyl bedeutet.

4. Stabilisatorzusammensetzung nach Anspruch 1, enthaltend als Komponente b) eine Verbindung aus der Reihe der Zeolithe.

5. Stabilisatorzusammensetzung nach Anspruch 1, enthaltend als Komponente b) einen Zeolith 4A.

6. Stabilisierte chlorhaltige Polymerzusammensetzung enthaltend, ein chlorhaltiges Polymer,
a) mindestens eine organische Zinnoxidverbindung der Formel
(RₐSnO_{b})_{c} (I),
wobei R C₁-C₁₈-Alkyl bedeutet; a die Zahl 1 oder 2; b = (4-a)/2;
und c grösser oder gleich 1 ist; und
b) mindestens eine Verbindung aus der Reihe der kristallinen Alkali-/Erdalkali-alumosilikate.

7. Stabilisierte chlorhaltige Polymerzusammensetzung nach Anspruch 6 enthatltend.
a) 0,1 bis 4 Gew.-Teile mindestens einer organischen Zinnoxidverbindung der Formel (I);
b) 0,2 bis 10 Gew.-Teile mindestens einer Verbindung aus der Reihe der kristallinen Alkali-/Erdalkali-alumosilikate;
und 100 Gew.-Teile chlorhaltiges Polymer.

8. Stabilisierte chlorhaltige Polymerzusammensetzung nach Anspruch 6 enthaltend,
a) 0,4 bis 2 Gew.-Teile mindestens einer organischen Zinnoxidverbindung der Formel (I);
b) 0,4 bis 6 Gew.-Teile mindestens einer Verbindung aus der Reihe der kristallinen Alkali-/Erdalkali-alumosilikate;
und 100 Gew.-Teile chlorhaltiges Polymer.

9. Stabilisierte chlorhaltige Polymerzusammensetzung nach Anspruch 6, worin das chlorhaltige Polymer nachchloriertes Polyvinylchlorid Polyvinylchlorid, ein Homo- oder Copolymer des Vinylidenchlorides ist oder dieses enthält.

10. Stabilisierte chlorhaltige Polymerzusammensetzung nach Anspruch 6, worin das chloraltige Polymer nachchloriertes Polyvivylchlorid ist oder dieses enthält.

11. Verfahren zum Stabilisieren von chlorhaltigen Polymeren, welches davin besteht, dass man zu dem chlorhaltigen Polymer
a) mindestens eine organische Zinnoxidverbindung der Formel
(RₐSnO_{b})_{c} (I),
wobei R C₁-C₁₈-Alkyl bedeutet; a die Zahl 1 oder 2; b (4-a)/2;
und c grösser oder gleich 1 ist;
und
b) mindestens eine Verbindung aus der Reihe der kristallinen
Alkali-/Erdalkali-alumosilikate
zugibt.

## Claims

1. A stabilizer composition for chlorine-containing polymers, comprising
a) at least one organotin oxide compound of the formula
(RₐSnO_{b})_{c} (I),
where R is C₁-C₁₈alkyl; a is the number 1 or 2; b = (4-a)/2;
and c is greater than or equal to 1;
and
b) at least one compound from the series consisting of crystalline alkali/alkaline earth metal alumosilicates.

2. A stabilizer composition according to claim 1, wherein component a) is a compound of the formula (I) in which R is C₄-C₁₂alkyl.

3. A stabilizer composition according to claim 1, wherein component a) is a mixture of compounds of the formulae R₂SnO (II) and (RSnO)₂O (III) in which R is C₁-C₁₈alkyl.

4. A stabilizer composition according to claim 1, wherein component b) is a compound from the series consisting of the zeolites.

5. A stabilizer composition according to claim 1, wherein component b) is a 4A zeolite.

6. A stabilized chlorine-containing polymer composition comprising a chlorine-containing polymer,
a) at least one organotin oxide compound of the formula
(RₐSnO_{b})_{c} (I),
where R is C₁-C₁₈alkyl; a is the number 1 or 2; b = (4-a)/2;
and c is greater than or equal to 1; and
b) at least one compound from the series consisting of crystalline alkali/alkaline earth metal alumosilicates.

7. A stabilized chlorine-containing polymer composition according to claim 6, comprising
a) from 0.1 to 4 parts by weight of at least one organotin oxide compound of the formula (I);
b) from 0.2 to 10 parts by weight of at least one compound from the series consisting of the crystalline alkali/alkaline earth metal alumosilicates;
and 100 parts by weight of chlorine-containing polymer.

8. A stabilized chlorine-containing polymer composition according to claim 6, comprising
a) from 0.4 to 2 parts by weight of at least one organotin oxide compound of the formula (I);
b) from 0.4 to 6 parts by weight of at least one compound from the series consisting of the crystalline alkali/alkaline earth metal alumosilicates;
and 100 parts by weight of chlorine-containing polymer.

9. A stabilized chlorine-containing polymer composition according to claim 6, in which the chlorine-containing polymer is or comprises post-chlorinated polyvinyl chloride, polyvinyl chloride, or a homopolymer or copolymer of vinylidene chloride.

10. A stabilized chlorine-containing polymer composition according to claim 6, in which the chlorine-containing polymer is or comprises post-chlorinated polyvinyl chloride.

11. A process for the stabilization of chlorine-containing polymers, which comprises adding
a) at least one organotin oxide compound of the formula
(RₐSnO_{b})_{c} (I),
where R is C₁-C₁₈alkyl; a is the number 1 or 2; b = (4-a)/2;
and c is greater than or equal to 1;
and
b) at least one compound from the series consisting of crystalline alkali/alkaline earth metal alumosilicates
to the chlorine-containing polymer.

## Revendications

1. Composition de stabilisant pour polymères contenant du chlore, comprenant :
a) au moins un composé organique d'oxyde d'étain de formule
(RₐSnO_{b})_{c} (I),
dans laquelle R signifie un alkyle en C₁-C₁₈ ; a est le nombre 1 ou 2 ; b = (4-a)/2, et c est supérieur ou égal à 1,
et
b) au moins un composé de la série des aluminosilicates alcalins/alcalino-terreux cristallins.

2. Composition de stabilisant suivant la revendication 1, comprenant comme composant a) un composé de formule (I), dans laquelle R signifie un alkyle en C₄-C₁₂.

3. Composition de stabilisant suivant la revendication 1, comprenant comme composant a) un mélange de composés de formules R₂SnO (II) et (RSnO)₂O (III), dans lesquelles R signifie un alkyle en C₁-C₁₈.

4. Composition de stabilisant suivant la revendication 1, comprenant comme composant b) un composé de la série des zéolithes.

5. Composition de stabilisant suivant la revendication 1, comprenant comme composant b) une zéolithe 4A.

6. Composition stabilisée de polymère contenant du chlore, comprenant un polymère contenant du chlore,
a) au moins un composé organique d'oxyde d'étain de formule
(RₐSnO_{b})_{c} (I),
dans laquelle R signifie un alkyle en C₁-C₁₈ ; a est le nombre 1 ou 2 ; b = (4-a)/2, et c est supérieur ou égal à 1, et
b) au moins un composé de la série des aluminosilicates alcalins/alcalino-terreux cristallins.

7. Composition stabilisée de polymère contenant du chlore suivant la revendication 6, comprenant
a) 0,1 à 4 parties en poids d'au moins un composé organique d'oxyde d'étain de formule (I) ;
b) 0,2 à 10 parties en poids d'au moins un composé de la série des aluminosilicates alcalins/alcalino-terreux cristallins,
et 100 parties en poids de polymère contenant du chlore.

8. Composition stabilisée de polymère contenant du chlore suivant la revendication 6, comprenant
a) 0,4 à 2 parties en poids d'au moins un composé organique d'oxyde d'étain de formule (I) ;
b) 0,4 à 6 parties en poids d'au moins un composé de la série des aluminosilicates alcalins/alcalino-terreux cristallins,
et 100 parties en poids de polymère contenant du chlore.

9. Composition stabilisée de polymère contenant du chlore suivant la revendication 6, dans laquelle le polymère contenant du chlore est le poly(chlorure de vinyle) surchloré, le poly(chlorure de vinyle), un homopolymère ou un copolymère du chlorure de vinylidène, ou comprend un de ceux-ci.

10. Composition stabilisée de polymère contenant du chlore suivant la revendication 6, dans laquelle le polymère contenant du chlore est le poly(chlorure de vinyle) surchloré ou comprend celui-ci.

11. Procédé de stabilisation de polymères contenant du chlore, qui consiste en ce que l'on ajoute au polymère contenant du chlore
a) au moins un composé organique d'oxyde d'étain de formule
(RₐSnO_{b})_{c} (I),
dans laquelle R signifie un alkyle en C₁-C₁₈ ; a est le nombre 1 ou 2 ; b = (4-a)/2, et c est supérieur ou égal à 1,
et
b) au moins un composé de la série des aluminosilicates alcalins/alcalino-terreux cristallins.
